# EUROPEAN PATENT APPLICATION

(11) **EP 4 538 445 A1**
(43) Date of publication of application: **16.04.2025**
(21) Application number: 23818914.6
(22) Date of filing: 18.05.2023
(51) Int. Cl.: D06F 39/08, D06F 39/10

(54) **DOUBLE-PUMP ASSEMBLY AND CLOTHES TREATMENT APPARATUS HAVING SAME**

(30) Priority: 09.06.2022 CN 202210653547
(71) Applicant: QINGDAO HAIER LAUNDRY ELECTRIC APPLIANCES CO., LTD, Qingdao, Shandong 266101 (CN); Haier Smart Home Co., Ltd., Qingdao, Shandong 266101 (CN)
(72) Inventor: PAN, Wenwu, Qingdao, Shandong 266101 (CN); LU, Jinbo, Qingdao, Shandong 266101 (CN); LIU, Xiaochun, Qingdao, Shandong 266101 (CN); YANG, Fei, Qingdao, Shandong 266101 (CN); FAN, Xianfeng, Qingdao, Shandong 266101 (CN)
(74) Representative: Patentwerk B.V.
(86) International application number: PCT/CN2023/094912
(87) International publication number: WO 2023/236749

(57) **Abstract**

A double-pump assembly and a clothes treatment device having the same are provided. The double-pump assembly comprises a pump body (10), and a first pump head assembly (20) and a second pump head assembly (30) arranged in the pump body (10), wherein the pump body (10) is provided with a water inlet (101), a first water outlet (104) and a second water outlet (105), the water inlet (101) is connected to the first water inlet cavity (102) or the second water inlet cavity (103) in the pump body (10), the first pump head assembly (20) is configured to enable water entering the first water inlet cavity (102) through the water inlet (101) to be discharged through the first water outlet (104), and the second pump head assembly (30) is configured to enable water entering the second water inlet cavity (103) through the water inlet (101) to be discharged through the second water outlet (105).

## Description

### TECHNICAL FIELD

The present invention relates to the technical field of clothes treatment, and particularly provides a double-pump assembly and a clothes treatment device having the same.

### BACKGROUND

With increasingly improved living standards, washing machines are more and more widely used. Taking a drum washing machine as an example, a drum washing machine usually includes a cabinet, a drum assembly located inside the cabinet, and a water way system. The drum assembly usually includes an inner drum and an outer drum that are connected to each other, and the inner drum can rotate relative to the outer drum. The water way system includes a water inlet pipe, and tap water enters the inner drum through the water inlet pipe. During a washing process, the clothes to be washed in the inner drum are repeatedly lifted up and thrown down, so as to achieve an object of washing clothes coupled with the effect of a detergent and washing water. The water way system further includes a drainage pipe and a drainage pump arranged on the drainage pipe, such that after a rinsing stage and a drying stage, the washing water in the outer drum can be discharged from the drainage pipe under the effect of the drainage pump.

In order to satisfy increasingly higher requirements on the functionality, environmental friendliness and washing rate of the washing machine, the water way system further includes a circulation pipe and a circulation pump arranged on the circulation pipe. One end of the circulation pipe is connected to a water outlet on an outer drum and the other end of the circulation pipe is connected to a water inlet of circulating water of the outer drum, such that water at the bottom of the outer drum flows to the upper portion of the outer drum through the circulation pipe under the effect of the circulation pump, thereby realizing circulating flow of the washing water and improving the washing rate of the washing machine.

However, owing to an additionally arranged circulation pump and corresponding pipelines and valves as well, the cost of the drum washing machine is inevitably increased. Meanwhile, the separately arranged circulation pump and the drainage pump need to take up a lot of space inside the drum washing machine. During assembly, two water pumps need to be installed separately, thereby leading to an increase in production processes and a reduction in productivity. During the washing process, the noise generated by each of the two pumps is also relatively loud.

Correspondingly, there is a need for a novel technical solution in the field to solve the above problems.

### SUMMARY

The present invention aims at solving the above technical problems, that is, solving the problems in the prior art that the independently arranged circulation pump and drainage pump in a drum washing machine need to take up a lot of space, the production efficiency is low, the noise is loud, and the cost is high.

In a first aspect, the present invention provides a double-pump assembly, where the double-pump assembly includes a pump body, the pump body is internally provided with a first water inlet cavity and a second water inlet cavity that are connected to each other, the pump body is provided with a water inlet, the water inlet is connected to the first water inlet cavity or the second water inlet cavity, the pump body is further provided with a first water outlet and a second water outlet, the double-pump assembly further includes a first pump head assembly and a second pump head assembly arranged in the pump body, the first pump head assembly is configured to enable water entering the first water inlet cavity through the water inlet to be discharged through the first water outlet, and the second pump head assembly is configured to enable water entering the second water inlet cavity through the water inlet to be discharged through the second water outlet.

In the preferred technical solution of the above double-pump assembly, the pump body is further provided with an intermediate cavity, and the intermediate cavity is arranged between the first water inlet cavity and the second water inlet cavity and communicates the first water inlet cavity with the second water inlet cavity.

In the preferred technical solution of the above double-pump assembly, the pump body is further provided with a first water outlet cavity and a second water outlet cavity, the first water outlet cavity is connected to the first water inlet cavity, the second water outlet cavity is connected to the second water inlet cavity, the first water outlet is connected to the first water outlet cavity, and the second water outlet is connected to the second water outlet cavity.

In the preferred technical solution of the above double-pump assembly, the double-pump assembly further includes a first filter assembly, the first filter assembly is removably arranged in the pump body, the first water inlet cavity is connected to the first water outlet cavity through a first through hole, and the first filter assembly is configured to filter water entering the first water outlet cavity through the first through hole.

In the preferred technical solution of the above double-pump assembly, the pump body is provided with a first mounting opening, the first mounting opening is connected to the first water inlet cavity, the first filter assembly includes a first screw cap and a first filter member, the first screw cap is fittingly connected to the first mounting opening, a first end of the first filter member is connected to the first screw cap, and a second end of the first filter member is connected to the first through hole.

In the preferred technical solution of the above double-pump assembly, the double-pump assembly further includes a second filter assembly, the second filter assembly is removably arranged in the pump body, the second water inlet cavity is connected to the second water outlet cavity through a second through hole, and the second filter assembly is configured to filter water entering the second water outlet cavity through the second through hole.

In the preferred technical solution of the above double-pump assembly, the pump body is provided with a second mounting opening, the second mounting opening is connected to the second water inlet cavity, the second filter assembly includes a second screw cap and a second filter member, the second screw cap is fittingly connected to the second mounting opening, a first end of the second filter member is connected to the second screw cap, and a second end of the second filter member is connected to the second through hole .

In the preferred technical solution of the above double-pump assembly, the first filter member includes a first base body, and a first filter rod and a first filter drum arranged in the first base body, where the first base body is connected to the first screw cap, an end of the first filter rod away from the first base body is inserted into the first filter drum through a first end of the first filter drum, a second end of the first filter drum is connected to the first through hole, the second filter member includes a second base body, and a second filter rod and a second filter drum arranged in the second base body, the second base body is connected to the second screw cap, an end of the second filter rod away from the second base body is inserted into the second filter drum through the first end of the second filter drum, the second end of the second filter drum is connected to the second through hole, where the height of the first filter drum is less than or equal to the height of the second filter drum, and a gap between the second filter rod and an inner wall of the first end of the second filter drum is less than or equal to a gap between the first filter rod and an inner wall of the first end of the first filter drum.

In the preferred technical solution of the above double-pump assembly, the double-pump assembly further includes a mounting assembly, the mounting assembly is connected to a target component, the pump body is arranged in the target component through the mounting assembly; and/or the pump body is further provided with an exhaust port, and the exhaust port is connected to the first water inlet cavity or the second water inlet cavity.

In the technical solution of the present invention, the double-pump assembly includes a pump body, and a first pump head assembly and a second pump head assembly arranged in the pump body, the pump body is internally provided with a first water inlet cavity and a second water inlet cavity that are connected with each other, the pump body is provided with a water inlet, a first water outlet and a second water outlet, and the water inlet is connected to the first water inlet cavity or the second water inlet cavity, such that external water can enter the first water inlet cavity or the second water inlet cavity through the water inlet, and then the external water can enter the second water inlet cavity through the first water inlet cavity or enter the first water inlet cavity through the second water inlet cavity. The first pump head assembly is configured to enable water entering the first water inlet cavity through the water inlet to be discharged through the first water outlet, and the second pump head assembly is configured to enable water entering the second water inlet cavity through the water inlet to be discharged through the second water outlet. In the present invention, through the arrangement of one water inlet, two water outlets, and two pump head assemblies, two pumps are integrated, and two different water flow paths which do not interfere with each other can be achieved through only one pump body. Compared with separately arranging two pumps, the double-pump assembly of the present invention requires less mounting space, moreover, since one water inlet and one pump body are reduced, then the number of related parts is correspondingly reduced, thereby facilitating mounting and reducing costs. In addition, each pump head assembly corresponds to one water flow path, the operating power of the pump head assembly can better match the working conditions of the water flow path, and the noise generated during operation is also smaller.

Further, the pump body is also provided with an intermediate cavity, the intermediate cavity is arranged between the first water inlet cavity and the second water inlet cavity and connects the first water inlet cavity with the second water inlet cavity, in this way, no matter in which position the water inlet is arranged in the pump body, with which water inlet cavity the water inlet is connected, and regardless of the amount of water, after water enters the pump body through the water inlet, the water can flow to the first water inlet cavity or the second water inlet cavity without obstruction according to requirements, thereby ensuring a stable operation no matter which pump head assembly is opened.

Further, the pump body is further provided with a first water outlet cavity and a second water outlet cavity, where the first water outlet cavity is connected to the first water inlet cavity, the second water outlet cavity is connected to the second water inlet cavity, the first water outlet is connected to the first water outlet cavity, and the second water outlet is connected to the second water outlet cavity. In this way, under the effect of the first pump head assembly or the second pump head assembly, the external water enters the first water inlet cavity or the second water inlet cavity from the water inlet, and then enters the first water outlet cavity or the second water outlet cavity through the first water inlet cavity or the second water inlet cavity, and then is discharged from the first water outlet or the second water outlet, thereby ensuring continuity of the water discharged from the first water outlet and the second water outlet, and further ensuring continuity of the operation of the double-pump assembly.

Further, the double-pump assembly further includes a first filter assembly and a second filter assembly, the first filter assembly and the second filter assembly are both removably arranged in the pump body, the first water inlet cavity is connected to the first water outlet cavity through a first through hole, the second water inlet cavity is connected to the second water outlet cavity through a second through hole, the first filter assembly is configured to filter the water entering the first water outlet cavity through the first through hole, and the second filter assembly is configured to filter the water entering the second water outlet cavity through the second through hole. In this way, during operation of the double-pump assembly, the water coming out of the first water outlet will be processed by the first filter assembly first, and the water coming out of the second water outlet will be filtered by the second filter assembly first, thereby also ensuring cleanliness of the water coming out of the first water outlet and the second water outlet, and satisfying the water quality requirements of each water way. After the first filter assembly and the second filter assembly are polluted, the first filter assembly and the second filter assembly can be disassembled for cleaning and replacement, thereby better ensuring the filtration effect. Moreover, the two water ways are respectively provided with filter assemblies, and then specific types of the first filter assembly and the second filter assembly can be selected according to specific requirements, thereby better satisfying the water quality requirements of different water ways.

Further, the pump body is provided with a first mounting opening connected to the first water inlet cavity, and a second mounting opening connected to the second water inlet cavity, the first filter assembly includes a first screw cap and a first filter member, the first screw cap is fittingly connected to the first mounting opening, the first end of the first filter member is connected to the first screw cap, and the second end of the first filter member is connected to the first through hole. The second filter assembly includes a second screw cap and a second filter member, the second screw cap is fittingly connected to the second mounting opening, the first end of the second filter member is connected to the second screw cap, and the second end of the second filter member is connected to the second through hole. **In** this way, the first filter member and the second filter member are arranged at the first through hole and the second through hole, respectively, and the water in the first water inlet cavity is filtered by the first filter member and then enters the first water outlet cavity, and the water in the second water inlet cavity is filtered by the second filter member and then enters the second water outlet cavity, thereby ensuring cleanliness of the water entering the first water outlet cavity and the second water outlet cavity, and satisfying the water quality requirements of each water way.

Further, the first filter member includes a first base body and a first filter rod and a first filter drum arranged in the first base body, where the first base body is connected to a first screw cap, an end of the first filter rod away from the first base body is inserted into the first filter drum through a first end of the first filter drum, and a second end of the first filter drum is connected to the first through hole. The second filter member includes a second base body and a second filter rod and a second filter drum arranged in the second base body, the second base body is connected to the second screw cap, an end of the second filter rod away from the second base body is inserted into the second filter drum through a first end of the second filter drum, and the second end of the second filter drum is connected to the second through hole. In this way, when the water flows through the first filter member and the second filter member, cotton wools and fibers in the water are first hung up by the first filter rod and the second filter rod, and then water flows into the first water outlet cavity and the second water outlet cavity through the gap between the first filter rod and the inner wall of the first end of the first filter drum, and through the gap between the second filter rod and the inner wall of the first end of the second filter drum. Since the gap between the first filter rod and the inner wall of the first end of the first filter drum and the gap between the second filter rod and the inner wall of the first end of the second filter drum are relatively small, then debris in the water can be further filtered, and a better filtration effect can be obtained.

The height of the first filter drum is less than or equal to the height of the second filter drum, and the gap between the second filter rod and the inner wall of the first end of the second filter drum is less than or equal to the gap between the first filter rod and the inner wall of the first end of the first filter drum, such that the water entering the second water inlet cavity slows down and then flows out through the second filter drum, and since the gap between the second filter rod and the inner wall of the first end of the second filter drum is smaller, debris such as sand, gravels, and buttons are better filtered out from water, therefore, compared with using the first filter assembly, a better filtration effect can be obtained by using the second filter assembly, that is, the water coming out of the second water outlet is of a higher purity. When the double-pump assembly of the present invention is used, the water way which requires a higher degree of cleanliness of water can be connected to the second water outlet, so as to better satisfy the filtration requirements.

A second aspect of the present invention also provides a clothes treatment device, where the clothes treatment device includes the double-pump assembly as described in any of the above solutions.

It should be noted that the clothes treatment device has all the technical effects of the above double-pump assembly and will not be repeated redundantly herein.

### BRIEF DESCRIPTION OF DRAWINGS

The double-pump assembly and the clothes treatment device having the same of the present invention are described below by taking a drum washing machine as an example in conjunction with the accompanying drawings, and in the accompanying drawings:
FIG. 1 is a structural diagram of a double-pump assembly according to an embodiment of the present invention;
FIG. 2 is a sectional view of a double-pump assembly according to an embodiment of the present invention;
FIG. 3 is a structural diagram of a pump body and a first mounting plate of a double-pump assembly according to an embodiment of the present invention;

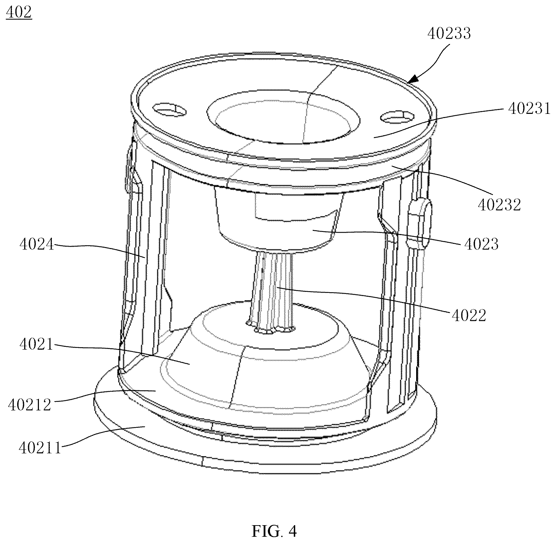

FIG. 4 is a structural diagram of a first filter member of a double-pump assembly according to an embodiment of the present invention;

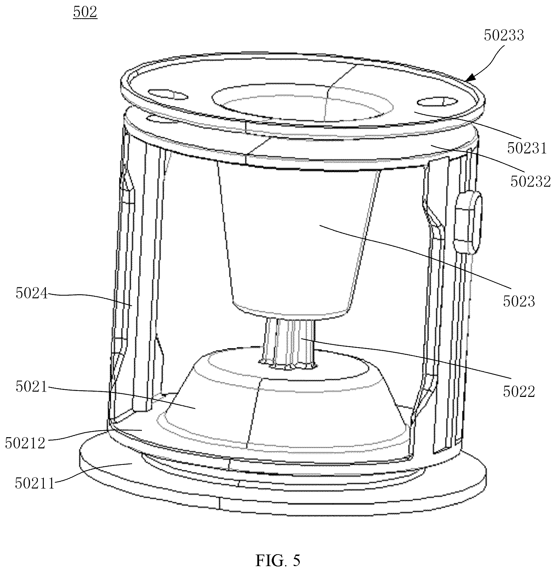

FIG. 5 is a structural diagram of a second filter member of a double-pump assembly according to an embodiment of the present invention;

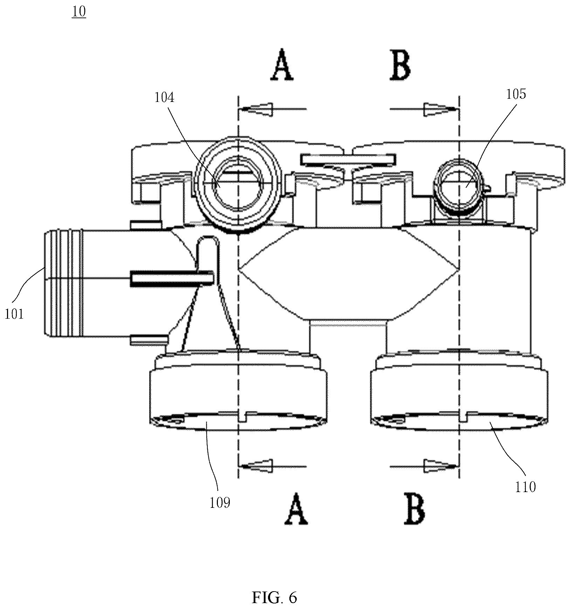

FIG. 6 is a structural diagram of a pump body of a double-pump assembly according to an embodiment of the present invention;

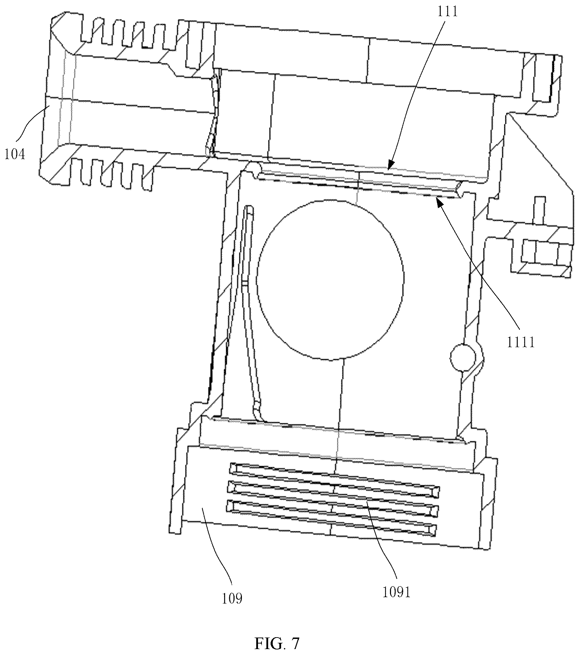

FIG. 7 is a sectional view of a plane A-A of FIG. 6;

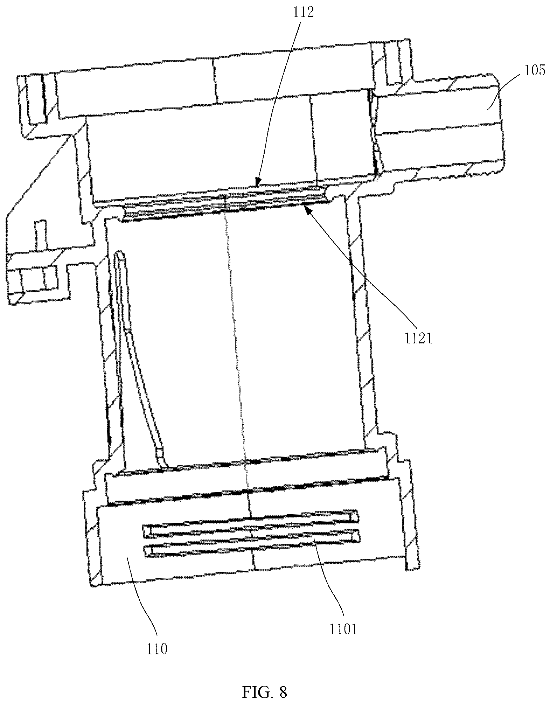

FIG. 8 is a sectional view of a plane B-B of FIG. 6.

### Reference numerals in the figures:

10, pump body; 101, water inlet; 102, first water inlet cavity; 103, second water inlet cavity; 104, first water outlet; 105, second water outlet; 106, intermediate cavity; 107, first water outlet cavity; 108, second water outlet cavity; 109, first mounting opening; 1091, second curved segment; 110, second mounting opening; 1101, fourth curved segment; 111, first through hole; 1111, second annular boss; 112, second through hole; 1121, fourth annular boss; 113, exhaust port; 20, first pump head assembly; 201, first driving mechanism; 30, second pump head assembly; 301, second driving mechanism; 40, first filter assembly; 401, first screw cap; 4011, first curved segment; 4012, first screw cap body 4013, first hand-held end; 4014, first folded edge; 402, first filter member; 4021, first base body; 40211, first flanging edge; 40212, second flanging edge; 4022, first filter rod; 4023, first filter drum; 40231, third flanging edge; 40232, fourth flanging edge; 40233, first annular boss; 4024, first connection member; 50, second filter assembly; 501, second screw cap; 5011, third curved segment; 5012, second screw cap body; 5013, second hand-held end; 5014, second folded edge; 502, second filter member; 5021, second base body; 50211, fifth flanging edge; 50212, sixth flanging edge; 5022, second filter rod; 5023, second filter drum; 50231, seventh flanging edge; 50232, eighth flanging edge; 50233, third annular boss; 5024, second connection member; 60, mounting assembly; 601, first mounting plate; 6011, locating column; 6012, first screw hole; 602, second mounting plate; 6021, protruding end; 6022, third screw hole.

### DETAILED DESCRIPTION

Preferred embodiments of the present invention are described below with reference to the accompanying drawings. It should be understood by those skilled in the art that these embodiments are merely used for explaining the technical principles of the present invention, rather than limiting the protection scope of the present invention. Although a drum washing machine is taken as an example for illustration in the present embodiment, apparently, the present embodiment is also applicable to other types of clothes treatment devices such as a pulsator washing machine, a washing-drying integral machine, or other occasions in which the double-pump assembly of the present application is required to be used.

It should be noted that in the description of the present invention, the orientation or positional relationships indicated by the terms "upper", "lower", "left", "right" are based on the orientation or positional relationships shown in the accompanying drawings, and such terms are merely for the convenience of description, rather than indicating or implying that the device or element must be constructed and operated in a particular orientation, and therefore such terms are not to be construed as a limitation to the present invention. In addition, the terms "first", "second", "third", "fourth", "fifth", "sixth", "seventh", and "eighth" are merely used for descriptive purposes, and are not to be construed as indicating or implying relative importance.

In order to satisfy increasingly higher requirements on the functionality, environmental friendliness and washing rate of the washing machine, a circulation pump is also arranged in the drum washing machine, and through the circulation pump, water at the bottom of the outer drum is circulated to the upper portion of the outer drum, so as to realize circulating flow of the washing water and improve the washing rate of the washing machine. However, in this way, a circulation pump and a drainage pump which are respectively arranged in the drum washing machine need to take up a lot of space in the drum washing machine, the mounting is inconvenient, the cost is increased, and the noise generated in the operation process is louder. To this end, the double-pump assembly provided by the present invention includes a water inlet, two water outlets, and two pump head assemblies, two pumps are integrated, two different water flow paths which do not interfere with each other can be achieved through only one pump body. Compared with separately arranging two pumps, the double-pump assembly of the present invention requires less mounting space, the number of related parts is reduced, therefore, the mounting is facilitated, the cost is lower, and noise generated in the operation process is relatively low.

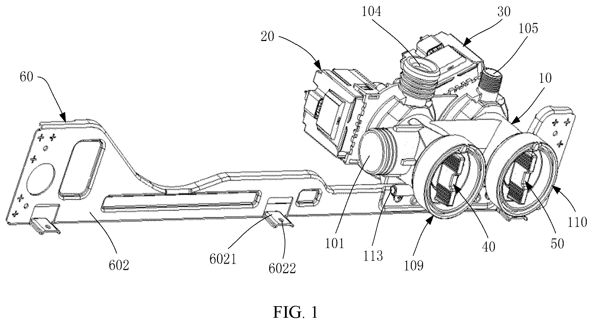

Possible implementations of a double-pump assembly and a drum washing machine having the double-pump assembly of the present invention are described below in combination with FIGS. 1 to 3.

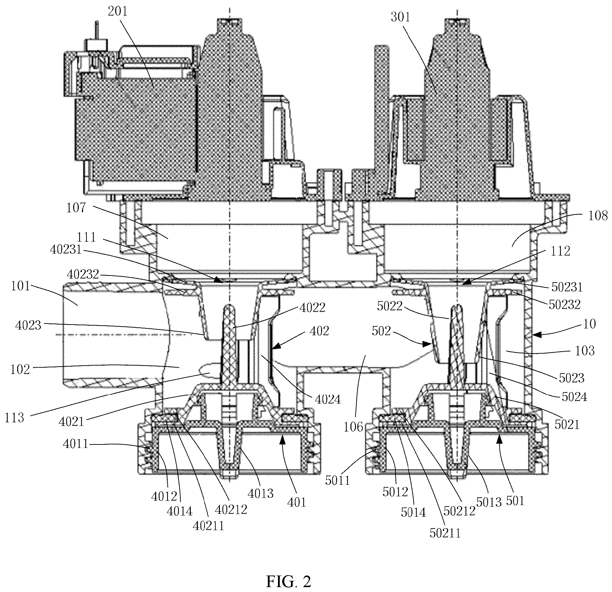

As shown in FIGS. 1 and 2 and according to the orientation shown in FIG. 2, the double-pump assembly includes a pump body 10, and a first pump head assembly 20 and a second pump head assembly 30, and the first pump head assembly 20 and the second pump head assembly 30 are arranged in the pump body 10 by snap-in connection or bolted connection. The pump body 10 is internally provided with a first water inlet cavity 102 and a second water inlet cavity 103 that are connected with each other, where the first water inlet cavity 102 is located on a left side, and the second water inlet cavity 103 is located on a right side. The pump body 10 is provided with a water inlet 101, a first water outlet 104 and a second water outlet 105, and the water inlet 101 is connected to the first water inlet cavity 102, such that external water can enter the first water inlet cavity 102 through the water inlet 101, and then the external water can enter the second water inlet cavity 103 through the first water inlet cavity 102. The first pump head assembly 20 includes a first driving mechanism 201 and a first impeller (not shown in the figures) connected with the first driving mechanism 201, and during operation of the first pump head assembly 20, the first driving mechanism 201 operates to drive the first impeller to rotate, and under the rotation of the first impeller, external water is sucked into the first water inlet cavity 102 through the water inlet 101, and then the external water is discharged through the first water outlet 104. The second pump head assembly 30 includes a second driving mechanism 301 and a second impeller (not shown in the figure) connected with the second driving mechanism 301, during operation of the second pump head assembly 30, the second driving mechanism 301 operates to drive the second impeller to rotate, and under the rotation of the second impeller, the external water is sucked into the first water inlet cavity 102 through the water inlet 101, and is further sucked into the second water inlet cavity 103, and is then discharged through the second water outlet 105. In this way, by arranging one water inlet 101, two water outlets and two pump head assemblies on the pump body 10, two pumps are integrated, and two different water flow paths which do not interfere with each other can be achieved through only one pump body 10. Compared with separately arranging two pumps, the double-pump assembly of the present invention requires less mounting space, moreover, since one water inlet 101 and one pump body 10 are reduced, then the number of related parts is correspondingly reduced, thereby facilitating mounting and reducing costs. In addition, each pump head assembly corresponds to one water flow path, the operating power of the pump head assembly can better match the working conditions of the water flow path, and the noise generated during operation is also smaller. In the present invention, an upper edge of the water inlet 101 of the double-pump assembly is approximately flush with an upper side wall of the first water inlet cavity 102, and the radial dimension of the water inlet 101 is merely slightly less than the height of the first water inlet cavity 102 and the second water inlet cavity 103, such that when the double-pump assembly is in operation, the water entering the pump body 10 through the water inlet can fill the first water inlet cavity 102 and the second water inlet cavity 103, thereby further avoiding air trapping due to the presence of air inside the first water inlet cavity 102 and the second water inlet cavity 103, better controlling the flow of each water flow path, and reducing noise during operation. Moreover, since water can fill the first water inlet cavity 102 and the second water inlet cavity 103, the double-pump assembly can also be ensured to start smoothly when it is initially started, and water can be discharged smoothly from the first water outlet 104 and the second water outlet 105, and water will not be discharged poorly due to the presence of air inside the first water inlet cavity 102 and the second water inlet cavity 103.

It should be noted that the water inlet 101 can also be connected to the second water inlet cavity 103, in this case, when the first pump head assembly 20 is in operation, the external water first enters the second water inlet cavity 103 through the water inlet 101, then enters the first water inlet cavity 102 through the second water inlet cavity 103, and is then discharged through the first water outlet 104.

To facilitate description, the double-pump assembly provided by the present invention is described below by taking the water inlet 101 connected to the first water inlet cavity 102 as an example in conjunction with FIGS. 1 to 3.

As shown in FIGS. 1 to 3 and according to the orientation shown in FIG. 2, the pump body 10 is further provided with an intermediate cavity 106, the intermediate cavity 106 is located between the first water inlet cavity 102 and the second water inlet cavity 103, and one end of the intermediate cavity 106 is connected to the first water inlet cavity 102 and the other end is connected to the second water inlet cavity 103, such that the first water inlet cavity 102 is connected to the second water inlet cavity 103 through the intermediate cavity 106. The intermediate cavity 106 is substantially of a long cylindrical structure, and the radial dimension of the intermediate cavity 106 is substantially the same as the radial dimension of the water inlet 101, in this way, when the second pump head assembly 30 is in operation, external water is sucked into the first water inlet cavity 102 through the water inlet 101, and then enters the second water inlet cavity 103 through the intermediate cavity 106, and is then discharged through the second water outlet 105. In this case, since the radial dimension of the intermediate cavity 106 is large, the upper and lower sides of the inner wall are roughly flush with the upper and lower sides of the inner walls of the first water inlet cavity 102 and the second water inlet cavity 103, such that the water entering the pump body from the water inlet 101 can fill the first water inlet cavity 102 and the second water inlet cavity 103, and an expected water flow rate can be achieved without increasing the operating power of the second pump head assembly 30, meanwhile, air trapping due to the presence of air inside the first water inlet cavity 102 and the second water inlet cavity 103 can be avoided, and noise cannot be generated due to smaller radial dimension of the intermediate cavity 106 and due to too fast flowing speed of the water flow in the intermediate cavity 106, thereby better controlling the flow rate of each water flow path, reducing the noise generated in the operation process, and ensuring stable and low-noise operation of the double-pump assembly. Apparently, the radial dimension of the intermediate cavity 106 may also be greater than the radial dimension of the water inlet 101. Of course, the radial dimension of the intermediate cavity 106 may also be less than the radial dimension of the water inlet 101, but in this case, the noise generated during operation may be loud due to a small radial dimension of the intermediate cavity 106.

It should be noted that the intermediate cavity 106 may also not be arranged in the pump body 10, but the first water inlet cavity 102 is connected to the second water inlet cavity 103 through a connecting pipe, however, the diameter of the connecting pipe is preferably similar to the diameter of the water inlet 101, otherwise the water flow easily generates noise when flowing through the connecting pipe, thereby reducing the user experience.

As shown in FIGS. 1 to 3 and according to the orientation shown in FIG. 2, the pump body 10 is further internally provided with a first water outlet cavity 107 and a second water outlet cavity 108, the first water outlet cavity 107 is located on an upper side of the first water inlet cavity 102 and is connected to the first water inlet cavity 102, the second water outlet cavity 108 is located on an upper side of the second water inlet cavity 103 and is connected to the second water inlet cavity 103, the first water outlet 104 is connected to the first water outlet cavity 107, and the second water outlet 105 is connected to the second water outlet cavity 108. The first impeller extends into the first water outlet cavity 107, and the second impeller extends into the second water outlet cavity 108. Under the effect of the first pump head assembly 20 or the second pump head assembly 30, the external water enters the first water inlet cavity 102 or the second water inlet cavity 103, and then enters the first water outlet cavity 107 or the second water outlet cavity 108 through the first water inlet cavity 102 or the second water inlet cavity 103, and then is discharged from the first water outlet 104 or the second water outlet 105. In this way, during operation of the first pump head assembly 20 or the second pump head assembly 30, water can always be stored in the first water outlet cavity 107 and the second water outlet cavity 108, thereby ensuring continuity of the water discharged from the first water outlet 104 and the second water outlet 105, and further ensuring continuity of the operation of the double-pump assembly.

It should be noted that only a first water outlet cavity 107 or a second water outlet cavity 108 may be arranged in the pump body 10. Apparently, the first water outlet cavity 107 and the second water outlet cavity 108 may not be arranged in the pump body 10. In this case, only the first water inlet cavity 102 and the second water inlet cavity 103 are arranged in the pump body 10. The first water outlet 104 is connected to the first water inlet cavity 102, and the second water outlet 105 is connected to the second water inlet cavity 103. The first impeller of the first pump head assembly 20 extends into the first water inlet cavity 102, and the second impeller of the second pump head assembly 30 extends into the second water inlet cavity 103. When the first pump head assembly 20 is in operation, the external water can also be sucked into the first water inlet cavity 102 and then is discharged through the first water outlet 104. When the second pump head assembly 30 is in operation, the external water can also be sucked into the second water inlet cavity 103 and then is discharged through the second water outlet 105. However, since the first water outlet cavity 107 and the second water outlet cavity 108 are not arranged, the problem of discontinuity of water flowing through the first water outlet 104 and the second water outlet 105, or the problem of loud noise due to the presence of air bubbles in the water discharged from the first water outlet 104 and the second water outlet 105 may arise during operation.

As shown in FIGS. 1 to 3, the double-pump assembly further includes a first filter assembly 40 and a second filter assembly 50, and both the first filter assembly 40 and the second filter assembly 50 are removably arranged in the pump body 10. A first through hole 111 is arranged between the first water inlet cavity 102 and the first water outlet cavity 107, the first water inlet cavity 102 is connected to the first water outlet cavity 107 through the first through hole 111. A second through hole 112 is arranged between the second water inlet cavity 103 and the second water outlet cavity 108, and the second water inlet cavity 103 is connected to the second water outlet cavity 108 through the second through hole 112. The first filter assembly 40 is configured to filter water entering the first water outlet cavity 107 through the first through hole 111, and the second filter assembly 50 is configured to filter water entering the second water outlet cavity 108 through the second through hole 112. In this way, during operation of the double-pump assembly, water coming out of the first water outlet 104 will be processed by the first filter assembly 40 first, and water coming out of the second water outlet 105 will be filtered by the second filter assembly 50 first, thereby also ensuring cleanliness of the water coming out of the first water outlet 104 and the second water outlet 105, and satisfying the water quality requirements of each water way. Since the first filter assembly 40 and the second filter assembly 50 are removably arranged in the pump body 10, after the first filter assembly 40 and the second filter assembly 50 are polluted, the first filter assembly 40 and the second filter assembly 50 can be conveniently disassembled for cleaning and replacement, thereby better ensuring the filtration effect. Moreover, the two water ways are respectively provided with filter assemblies, and then specific types of the first filter assembly 40 and the second filter assembly 50 can be selected according to specific requirements, thereby better satisfying the water quality requirements of different water ways.

It should be noted that the double-pump assembly may also include only the first filter assembly 40 or the second filter assembly 50, with the double-pump assembly including only the first filter assembly 40 as an example, in this case, the water discharged through the second water outlet 105 is not filtered, and the water in the water way cannot satisfy the water quality requirements. Apparently, the double-pump assembly may also not include the first filter assembly 40 and the second filter assembly 50, in this case, the water entering the pump body 10 is discharged through the first water outlet 104 and the second water outlet 105 without filtration, and the water cannot satisfy the water quality requirements.

As shown in FIGS. 1 to 3, the pump body 10 is provided with a first mounting opening 109 and a second mounting opening 110, where the first filter assembly 40 includes a first screw cap 401 and a first filter member 402, an outer edge of the first screw cap 401 is provided with a first curved segment 4011, and a second curved segment 1091 fitting with the first curved segment 4011 is arranged on an inner wall of the first mounting opening 109, and the first screw cap 401 is fittingly connected with the first mounting opening 109 through fitting between the first curved segment 4011 and the second curved segment 1091. A first end of the first filter member 402 is connected to the first screw cap 401, and a second end of the first filter member 402 is connected to the first through hole 111. The second filter assembly 50 includes a second screw cap 501 and a second filter member 502, an outer edge of the second screw cap 501 is provided with a third curved segment 5011, and a fourth curved segment 1101 fitting with the third curved segment 5011 is arranged on an inner wall of the second mounting opening 110, and the second screw cap 501 is fittingly connected with the second mounting opening 110 through fitting between the third curved segment 5011 and the fourth curved segment 1101. A first end of the second filter member 502 is connected to the second screw cap 501, and a second end of the second filter member 502 is connected to the second through hole 112.

Therefore, during mounting, the first filter member and the second filter member are first connected to the first screw cap 401 and the second screw cap 501, respectively, and then the first curved segment 4011 is aligned with the portion of the inner wall of the first mounting opening 109 except the second curved segment 1091, and the first screw cap 401 is rotated, such that the first curved segment 4011 fits with the second curved segment 1091, the third curved segment 5011 is aligned with the portion of the inner wall of the second mounting opening 110 except the fourth curved segment 1101, and the second screw cap 501 is rotated, such that the third curved segment 5011 fits with the fourth curved segment 1101, and then the first screw cap 401 and the second screw cap 501 are mounted to the first mounting opening 109 and the second mounting opening 110 in a snap-fitting form, in this way, the first filter member 402 and the second filter member 502 can be arranged at the first through hole 111 and the second through hole 112, respectively, the water in the first water inlet cavity 102 is filtered by the first filter member 402 and then enters the first water outlet cavity 107, and the water in the second water inlet cavity 103 is filtered by the second filter member 502 and then enters the second water outlet cavity 108, thereby also ensuring cleanliness of the water entering the first water outlet cavity 107 and the second water outlet cavity 108, and satisfying the water quality requirements of each water way.

It should be noted that the first screw cap 401 can also be fittingly connected to the first mounting opening 109 in such manners, for example, bolted connection or bonding, and the second screw cap 501 can also be fittingly connected to the second mounting opening 110 in such manners, for example, bolted connection or bonding. Without departing from the principle of the present application, those skilled in the art may flexibly select the specific way of fitting connection between the first screw cap 401 and the first mounting opening 109 and between the second screw cap 501 and the second mounting opening 110 according to specific application scenarios, as long as the first filter member 402 and the second filter member 502 can be arranged in the pump body 10 through the first screw cap 401 and the second screw cap 501 and a better filtration effect can be obtained.

As shown in FIGS. 1 to 3 and according to the orientation shown in FIG. 2, the first mounting opening 109 is connected to the first water inlet cavity 102 and the second mounting opening 110 is connected to the second water inlet cavity 103, the first mounting opening 109 is arranged at a lower portion of the pump body 10 and just faces the first through hole 111, and the second mounting opening 110 is arranged at a lower portion of the pump body 10 and just faces the second through hole 112. Apparently, the first mounting opening 109 and the second mounting opening 110 may also not just face the first through hole 111 and the second through hole 112.

The first filter member 402 includes a first base body 4021, a first filter rod 4022, and a first filter drum 4023, where the first base body 4021 is substantially of an upwardly protruding circular truncated cone structure, and a first flanging edge 40211 extends outwards from a lower end of the first base body 4021, and the first flanging edge 40211 extends outwards in a horizontal direction. The first base body 4021 is provided with a second flanging edge 40212 above the first flanging edge 40211, and the second flanging edge 40212 extends outwards in a horizontal direction. Both the first flanging edge 40211 and the second flanging edge 40212 are arranged in a circumferential direction of the first base body 4021, and a first snap-in structure is formed by the first flanging edge 40211 and the second flanging edge 40212. The first screw cap 401 includes a first screw cap body 4012, a first hand-held end 4013 extends downwards from a lower side face of the first screw cap body 4012, and a first curved segment 4011 is arranged on a circumferential outer wall of the first screw cap body 4012. The upper side face of the first screw cap body 4012 is provided with a first folded edge 4014, the first folded edge 4014 extends inwards in a horizontal direction, the first folded edge 4014 is arranged in a circumferential direction of the first screw cap 401, and a first snap-in position is formed by the first folded edge 4014 and the upper side face of the first screw cap body 4012, and a first snap-in structure can be snap-fitted to the first snap-in position. The first filter rod 4022 and the first filter drum 4023 are both arranged in a vertical direction, where the diameter of the first filter rod 4022 gradually decreases from bottom to top, and the diameter of the first filter drum 4023 gradually increases from bottom to top. A lower end of the first filter rod 4022 is connected to an upper side of the first base body 4021, and an upper end of the first filter rod 4022 is inserted into the first filter drum 4023 through a first end of the first filter drum 4023 (i.e., the lower end of the first filter drum 4023 in FIG. 2), such that the gap between the first filter rod 4022 and the first filter drum 4023 gradually increases from bottom to top, and normal flow of water is not affected. The first filter member 402 further includes a first connection member 4024, the first connection member 4024 is substantially of a sheet-like structure, a first end of the first connection member 4024 (i.e., a lower end of the first connection member 4024 in FIG. 2) is connected to the first base body 4021, and a second end (i.e., an upper end of the first connection member 4024 in FIG. 2) is connected to the first filter drum 4023, in this way, the first filter drum 4023 is connected to the first base body 4021. A third flanging edge 40231 and a fourth flanging edge 40232 extend outwards from a second end of the first filter drum 4023 (i.e., an upper end of the first filter drum 4023 in FIG. 2), and the third flanging edge 40231 and the fourth flanging edge 40232 are arranged in a circumferential direction of the first filter drum 4023. The fourth flanging edge 40232 is connected to the second end of the first connection member 4024, and a first annular boss 40233 extends upwards from the upper side face of the third flanging edge 40231. A second annular boss 1111 extends downwards from an inner edge of the first through hole 111, and an outer diameter of the second annular boss 1111 is substantially the same as an inner diameter of the first annular boss 40233, and after mounting, the first annular boss 40233 wraps around an outer side of the second annular boss 1111. When the first filter assembly 40 is mounted, the first snap-in structure is first snap-fitted to the first snap-in position, then the first base body 4021 is arranged on the first screw cap 401 by snap-fitting, and then the first filter drum 4023 and the first filter rod 4022 extend into the first water inlet cavity 102, and an upward external force is applied, such that the first annular boss 40233 is fittingly connected to the second annular boss 1111, and then an external force is applied to the first hand-held end 4013, and the first screw cap 401 is rotated, such that the first screw cap 401 is mounted to the first mounting opening 109 by snap-fitting, and then the first filter assembly 40 is mounted into the first water inlet cavity 102.

The second filter member 502 includes a second base body 5021, a second filter rod 5022 and a second filter drum 5023, the second base body 5021 is substantially of an upwardly protruding circular truncated cone structure, a fifth flanging edge 50211 extends outwards from a lower end of the second base body 5021, and the fifth flanging edge 50211 extends outwards in a horizontal direction. The second base body 5021 is provided with a sixth flanging edge 50212 above the fifth flanging edge 50211, and the sixth flanging edge 50212 extends outwards in a horizontal direction. Both the fifth flanging edge 50211 and the sixth flanging edge 50212 are arranged in a circumferential direction of the second base body 5021, and a third snap-in structure is formed by the fifth flanging edge 50211 and the sixth flanging edge 50212. The second screw cap 501 includes a second screw cap body 5012, a second hand-held end 5013 extends downwards from a lower side face of the second screw cap body 5012, and a third curved segment 5011 is arranged on a circumferential outer wall of the second screw cap body 5012. An upper side face of the second screw cap body 5012 is provided with a second folded edge 5014, the second folded edge 5014 extends inwards along a horizontal direction, and the second folded edge 5014 is arranged in a circumferential direction of the second screw cap 501, and a second snap-in position is formed by the second folded edge 5014 and the upper side face of the second screw cap body 5012, and a third snap-in structure can be snap-fitted to the second snap-in position. The second filter rod 5022 and the second filter drum 5023 are both arranged in a vertical direction, moreover, the diameter of the second filter rod 5022 gradually decreases from bottom to top, and the diameter of the second filter drum 5023 gradually increases from bottom to top. A lower end of the second filter rod 5022 is connected to an upper side of the second base body 5021, and an upper end of the second filter rod 5022 is inserted into the second filter drum 5023 through a first end of the second filter drum 5023 (i.e., a lower end of the second filter drum 5023 in FIG. 2), such that a gap between the second filter rod 5022 and the second filter drum 5023 gradually increases from bottom to top, and normal flow of water is not affected. The second filter member 502 further includes a second connection member 5024, the second connection member 5024 is substantially of a sheet-like structure, and a first end of the second connection member 5024 (i.e., a lower end of the second connection member 5024 in FIG. 2) is connected to the second base body 5021, and a second end (i.e., an upper end of the second connection member 5024 in FIG. 2) is connected to the second filter drum 5023, in this way, the second filter drum 5023 is connected to the second base body 5021. A seventh flanging edge 50231 and an eighth flanging edge 50232 extend outwards from a second end of the second filter drum 5023 (i.e., an upper end of the second filter drum 5023 in FIG. 2), and the seventh flanging edge 50231 and the eighth flanging edge 50232 are arranged along a circumferential direction of the second filter drum 5023. The eighth flanging edge 50232 is connected to the second end of the second connection member 5024, and a third annular boss 50233 extends upwards from an upper side face of the seventh flanging edge 50231. A fourth annular boss 1121 extends downwards from an inner edge of the second through hole 112, and the outer diameter of the fourth annular boss 1121 is substantially the same as the inner diameter of the third annular boss 50233, and after mounting, the third annular boss 50233 wraps around the outer side of the fourth annular boss 1121. When the second filter assembly 50 is mounted, the third snap-in structure is first snap-fitted to the second snap-in position, therefore, the second base body 5021 is arranged on the second screw cap 501 by means of snap-fitting, and then the second filter drum 5023 and the second filter rod 5022 extend into the second water inlet cavity 103, an upward external force is applied, such that the third annular boss 50233 is fittingly connected to the fourth annular boss 1121, and then an external force is applied to the second hand-held end 5013, the second screw cap 501 is rotated, such that the second screw cap 501 is mounted to the second mounting opening 110 by snap-fitting, in this way, the second filter assembly 50 is mounted into the second water inlet cavity 103.

In this way, when water flows through the first filter member 402 and the second filter member 502, cotton wools and fibers in the water are first hung up by the first filter rod 4022 and the second filter rod 5022, and then water flows into the first water outlet cavity 107 and the second water outlet cavity 108 through the gap between the first filter rod 4022 and the inner wall of the first end of the first filter drum 4023, and through the gap between the second filter rod 5022 and the inner wall of the first end of the second filter drum 5023. Since the gap between the first filter rod 4022 and the inner wall of the first end of the first filter drum 4023 (i.e., a lower end of the first filter drum 4023 in FIG. 2) and the gap between the second filter rod 5022 and the inner wall of the first end of the second filter drum 5023 (i.e., a lower end of the second filter drum 5023 in FIG. 2) are relatively small, then debris such as sand, gravels, and buttons can be further filtered out from water, and a better filtration effect can be obtained.

As shown in FIGS. 1 to 3 and according to the orientation shown in FIG. 2, the height of the first filter drum 4023 is less than the height of the second filter drum 5023, the radial dimension of the first end of the second filter drum 5023 is less than the radial dimension of the first end of the first filter drum 4023, and the diameters of the first filter rod 4022 and the second filter rod 5022 arranged at the same height are substantially the same, such that the gap between the second filter rod 5022 and the inner wall of the first end of the second filter drum 5023 is less than the gap between the first filter rod 4022 and the inner wall of the first end of the first filter drum 4023. Due to a larger height of the second filter drum 5023, the water flow enters the second water inlet cavity 103 and slows down and then reaches the first end of the second filter drum 5023 (i.e., the lower end of the second filter drum 5023 in FIG. 2), and then enters the second water outlet cavity 108 through the gap between the second filter drum 5023 and the second filter rod 5022, moreover, since the gap between the second filter rod 5022 and the inner wall of the first end of the second filter drum 5023 is smaller, then debris such as sand, gravels, and buttons can be better filtered out from water, that is, compared with using the first filter assembly 40, a better filtration effect can be obtained by using the second filter assembly 50, that is, the water coming out of the second water outlet 105 is of a higher purity. When the double-pump assembly of the present invention is used, the water way which requires a higher degree of cleanliness of water can be connected to the second water outlet 105, so as to better satisfy filtration requirements.

It should be noted that the height of the first filter drum 4023 may also be the same as the height of the second filter drum 5023, in this case, the diameter of the first filter rod 4022 may be greater than the diameter of the second filter rod 5022 located at the same height, such that the gap between the first filter rod 4022 and the inner wall of the first end of the first filter drum 4023 is less than the gap between the second filter rod 5022 and the inner wall of the first end of the second filter drum 5023, thereby ensuring a better filtration effect of the second filter assembly 50. Apparently, the gap between the second filter rod 5022 and the inner wall of the first end of the second filter drum 5023 may also be the same as the gap between the first filter rod 4022 and the inner wall of the first end of the first filter drum 4023, in this case, since the height of the first filter drum 4023 is less than the height of the second filter drum 5023, the speed of the water flow at the first end of the first filter drum 4023 is less than the speed of the water flow at the first end of the second filter drum 5023, and the filtration effect of the second filter assembly 50 is also better than the filtration effect of the first filter assembly 40. Without departing from the principle of the present application, those skilled in the art may flexibly select the specific way of arranging the first filter drum 4023 and the second filter drum 5023 according to specific application scenarios, as long as debris in water flowing through the double-pump assembly can be filtered out.

It should be noted that the first filter member 402 and the second filter member 502 can also be set in other ways, for example, the first filter member 402 and the second filter member 502 can be set as a filter mesh or a filter grid, etc. With the first filter member 402 being set as the filter mesh as an example, the filter mesh is arranged in the first through hole 111, and the water entering the first water inlet cavity 102 through the water inlet 101 is filtered by the filter mesh and then enters the first water outlet cavity 107. Without departing from the principle of the present application, those skilled in the art may flexibly select the specific ways to set the first filter member 402 and the second filter member 502 according to specific application scenarios, as long as debris in the water flowing through the double-pump assembly can be filtered out.

Specific embodiments of the double-pump assembly of the present invention are illustrated below with the drum washing machine including a circulation water way and a drainage water way as an example in conjunction with accompanying drawings.

As shown in FIGS. 1 to 3, the drum washing machine includes a cabinet (not shown in the figure), where the cabinet is internally provided with an outer drum (not shown in the figures) and an inner drum (not shown in the figures) arranged within the outer drum, and the inner drum can rotate relative to the outer drum. A double-pump assembly is arranged in the cabinet, and a water inlet 101 is connected to the bottom of the outer drum. The drum washing machine includes a circulation water way (not shown in the figures) and a drainage water way (not shown in the figures), a first end of the drainage water way is connected to the first water outlet 104 of the pump assembly by snap-fitting or a pipe clamp, and a second end extends outside the cabinet, and a first end of the circulation water way is connected to the second water outlet 105 of the double-pump assembly by snap-fitting or a pipe clamp, and a second end is connected to the upper portion of the outer drum. In this way, during operation of the drum washing machine, the inner drum drives the clothes to be washed and placed in the inner drum to rotate, and the clothes to be washed are repeatedly lifted up and thrown down, so as to wash the clothes to be washed coupled with the effect of washing water and detergent. Moreover, the second pump head assembly 30 operates, and under the effect of the second pump head assembly 30, the water at the bottom of the outer drum enters the second water inlet cavity 103 of the double-pump assembly through the water inlet 101, and is filtered by the second filter assembly 50 and then enters the circulation water way through the second water outlet 105, and then returns to the upper portion of the outer drum. In a dewatering stage, the first pump head assembly 20 operates, and under the effect of the first pump head assembly 20, the water in the outer drum enters the first water inlet cavity 102 of the double-pump assembly through the water inlet 101, and is filtered by the first filter assembly 40 and then enters the drainage water way through the first water outlet 104, and is discharged through the drainage water way.

As shown in FIGS. 1 to 3, the double-pump assembly further includes a mounting assembly 60, the mounting assembly 60 includes a first mounting plate 601 and a second mounting plate 602, the first mounting plate 601 is arranged on the outer side of the pump body 10, the first mounting plate 601 is substantially a rectangular plate, the first mounting plate 601 is provided with two locating columns 6011 and four first screw holes 6012, and the second mounting plate 602 is provided with two locating holes (not shown in the figures) and four second screw holes (not shown in the figures) at corresponding positions. The second mounting plate 602 is provided with three protruding ends 6021, and each protruding end 6021 is provided with a third screw hole 6022. During mounting, the two locating columns 6011 are aligned with the two locating holes respectively and are inserted into the locating holes, and each fastener (e.g., a screw, a bolt and the like) passes through the first screw hole 6012 and the second screw hole in sequence, and is then fastened, so as to fixedly connect the first mounting plate 601 and the second mounting plate 602 together. Then each of the fasteners (e.g., a screw, a bolt and the like) passes through the second screw hole and is fixedly connected to the cabinet of the drum washing machine, thereby also arranging the double-pump assembly in the cabinet of the drum washing machine. Apparently, the fastener may also pass through the second screw hole and the first screw hole 6012 in sequence.

It should be noted that the number of the above locating columns, the first screw holes and the protruding ends is merely an exemplary description, without departing from the principle of the present application, those skilled in the art may flexibly choose the specific number of the locating columns, the first screw holes and the protruding ends according to specific application scenarios, as long as the dual-pump assembly can be arranged in the cabinet through the first mounting plate 601 and the second mounting plate 602.

It should be noted that the first mounting plate 601 and the second mounting plate 602 may also be fixedly connected by snap-fitting, inserting, bonding, bolted connection, etc., and the second mounting plate 602 may also be fixedly connected to the cabinet by snap-fitting, inserting, bonding, bolted connection, etc. Without departing from the principle of the present application, those skilled in the art may flexibly select the connection method between the first mounting plate 601 and the second mounting plate 602 and between the second mounting plate 602 and the cabinet according to specific application scenarios, as long as the double-pump assembly can be fixedly arranged in the cabinet.

It should be noted that the mounting assembly 60 may also be set in other forms, for example, the mounting assembly 60 includes only the first mounting plate 601, and the cabinet is provided with mounting holes fitting with the locating columns 6011 on the first mounting plate 601, such that through fitting between the locating columns 6011 and the mounting holes, the fastener is connected to the cabinet after passing through the first screw hole 6012, and the double-pump assembly can also be fixedly mounted in the cabinet. As another example, the mounting assembly 60 includes two mounting sheets extending outwards from an outer wall of the pump body 10, each of the mounting sheets is provided with a perforated hole, and each fastener is connected to the cabinet after penetrating through the perforated hole, thereby fixedly mounting the double-pump assembly inside the cabinet. Without departing from the principle of the present application, those skilled in the art may flexibly select the specific setting form of the mounting assembly 60 according to specific application scenarios, as long as the double-pump assembly can be arranged in the cabinet.

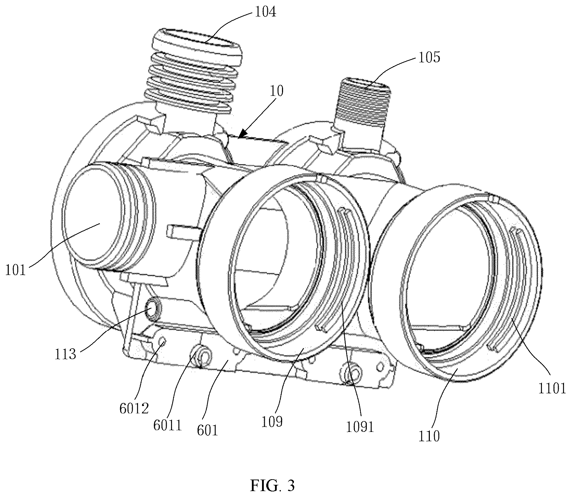

As shown in FIGS. 1 to 3 and according to the orientation shown in FIG. 3, the pump body 10 is further provided with an exhaust port 113, and the exhaust port 113 is connected to the first water inlet cavity 102 and is located at the lowest position of the first water inlet cavity 102. In this way, when the double-pump assembly stops operating, the water inside the pump body 10 is discharged through the exhaust port 113 until the water inside the pump body 10 is completely discharged, thereby avoiding bacteria and odor caused by water remaining inside the pump body 10.

It should be noted that the exhaust port 113 may also be connected to the second water inlet cavity 103. Without departing from the principle of the present application, those skilled in the art may flexibly select the specific setting position of the exhaust port 113 according to specific application scenarios, as long as the water in the pump body 10 can be completely discharged through the exhaust port 113.

A second aspect of the present invention also provides a clothes treatment device, and the clothes treatment device includes a double-pump assembly as described in any of the above embodiments.

It should be noted that the clothes treatment device has all the technical effects of the above double-pump assembly and will not be repeated redundantly herein.

In conclusion, in the preferred technical solution of the present invention, by arranging one water inlet 101, two water outlets and two pump head assemblies on the pump body 10, two pumps are integrated, and two different water flow paths which do not interfere with each other can be achieved through only one pump body 10. The required mounting space is small, so that mounting is facilitated, and moreover, the cost is reduced, and the noise generated during operation is reduced. The intermediate cavity 106, the first water outlet cavity 107 and the second water outlet cavity 108 are arranged to ensure stable operation of the double-pump assembly. The first filter assembly 40 and the second filter assembly 50 are arranged to better satisfy the water quality requirements of different water ways.

Of course, the above interchangeable embodiments and the interchangeable embodiments and preferred embodiments may also be used in crossed cooperation, so as to combine new embodiments for more specific application scenarios.

In addition, those skilled in the art may appreciate that although some embodiments described herein include some features but not other features included in other embodiments, the combination of features of different embodiments implies that the features fall within the scope of the present invention and form different embodiments. For example, in the claims of the present invention, any one of the embodiments claimed for protection may be used in any combination.

So far, the technical solutions of the present invention have been described in conjunction with the preferred embodiments shown in the accompanying drawings, however, those skilled in the art may easily understand that the protection scope of the present invention is apparently not limited to these specific embodiments. Without departing from the principles of the present invention, those skilled in the art may make equivalent changes or substitutions on the relevant technical features, and the technical solutions after such changes or substitutions will fall within the protection scope of the present invention.

## Claims

1. A double-pump assembly, comprising a pump body, wherein the pump body is internally provided with a first water inlet cavity and a second water inlet cavity that are connected to each other, the pump body is provided with a water inlet, and the water inlet is connected to the first water inlet cavity or the second water inlet cavity, and
the pump body is further provided with a first water outlet and a second water outlet, the double-pump assembly further comprises a first pump head assembly and a second pump head assembly arranged in the pump body, the first pump head assembly is configured to enable water entering the first water inlet cavity through the water inlet to be discharged through the first water outlet, and the second pump head assembly is configured to enable water entering the second water inlet cavity through the water inlet to be discharged through the second water outlet.

2. The double-pump assembly according to claim 1, wherein the pump body is further provided with an intermediate cavity, and the intermediate cavity is arranged between the first water inlet cavity and the second water inlet cavity and communicates the first water inlet cavity with the second water inlet cavity.

3. The double-pump assembly according to claim 1, wherein the pump body is further provided with a first water outlet cavity and a second water outlet cavity, the first water outlet cavity is connected to the first water inlet cavity, the second water outlet cavity is connected to the second water inlet cavity, the first water outlet is connected to the first water outlet cavity, and the second water outlet is connected to the second water outlet cavity.

4. The double-pump assembly according to claim 3, wherein the double-pump assembly further comprises a first filter assembly, the first filter assembly is removably arranged in the pump body, the first water inlet cavity is connected to the first water outlet cavity through a first through hole, and the first filter assembly is configured to filter water entering the first water outlet cavity through the first through hole.

5. The double-pump assembly according to claim 4, wherein the pump body is provided with a first mounting opening, the first mounting opening is connected to the first water inlet cavity, the first filter assembly comprises a first screw cap and a first filter member, the first screw cap is fittingly connected to the first mounting opening, a first end of the first filter member is connected to the first screw cap, and a second end of the first filter member is connected to the first through hole.

6. The double-pump assembly according to claim 5, further comprising a second filter assembly, wherein the second filter assembly is removably arranged in the pump body, the second water inlet cavity is connected to the second water outlet cavity through a second through hole, and the second filter assembly is configured to filter water entering the second water outlet cavity through the second through hole.

7. The double-pump assembly according to claim 6, wherein the pump body is provided with a second mounting opening, the second mounting opening is connected to the second water inlet cavity, the second filter assembly comprises a second screw cap and a second filter member, the second screw cap is fittingly connected to the second mounting opening, a first end of the second filter member is connected to the second screw cap, and a second end of the second filter member is connected to the second through hole.

8. The double-pump assembly according to claim 7, wherein the first filter member comprises a first base body, and a first filter rod and a first filter drum arranged in the first base body, the first base body is connected to the first screw cap, an end of the first filter rod away from the first base body is inserted into the first filter drum through a first end of the first filter drum, and the second end of the first filter drum is connected to the first through hole,
the second filter member comprises a second base body, and a second filter rod and a second filter drum arranged in the second base body, the second base body is connected to the second screw cap, an end of the second filter rod away from the second base body is inserted into the second filter drum through the first end of the second filter drum, and the second end of the second filter drum is connected to the second through hole, and
wherein the height of the first filter drum is less than or equal to the height of the second filter drum, and a gap between the second filter rod and an inner wall of the first end of the second filter drum is less than or equal to a gap between the first filter rod and an inner wall of the first end of the first filter drum.

9. The double-pump assembly according to claim 1, further comprising a mounting assembly, wherein the mounting assembly is connected to a target component, and the pump body is arranged in the target component through the mounting assembly; and/or
the pump body is further provided with an exhaust port, and the exhaust port is connected to the first water inlet cavity or the second water inlet cavity.

10. A clothes treatment device, comprising the double-pump assembly according to any one of claims 1-9.
